# FASCICULE DE BREVET EUROPEEN

(11) **EP 2 647 767 B1**
(45) Date de publication et mention de la délivrance du brevet: **02.09.2015**
(21) Numéro de dépôt: 13162119.5
(22) Date de dépôt: 03.04.2013
(51) Int. Cl.: E02D 27/42

(54) **Fondation d'éolienne off-shore.**
Off shore Gründung einer Windenergieanlage.
Off shore foundation of a wind motor.

(30) Priorité: 05.04.2012 FR 1253163
(43) Date de publication de la demande: 09.10.2013
(73) Titulaire: DCNS, 75015 Paris (FR)
(72) Inventeur: Moiret, Cyrille, Jacques, 56600 Lanester (FR)
(74) Mandataire: Jacobson, Claude

(56) Documents cités:
- EP-A1- 2 317 123
- US-A1- 2005 260 040

## Description

La présente invention est relative aux éoliennes off-shore.

Elle concerne en premier lieu une fondation d'éolienne off-shore, du type décrit dans le préambule de la revendication 1.

Le US-7 163 355 B2 décrit une fondation de ce type, dans lequel chaque jambe et son guide sont équipés d'un dispositif de déplacement relatif à vérins multiples et à crémaillères.

Lorsque la fondation, ou l'éolienne complète, arrive sur son site d'exploitation, ces dispositifs de déplacement permettent de faire descendre chaque jambe jusqu'à son contact avec le fond marin, puis de soulever la plate-forme à la hauteur désirée au-dessus du niveau de la mer.

Cette conception nécessite donc des jambes de structures complexes et de nombreux vérins, lesquels ne sont utilisés que lors de l'installation sur site, puis restent en place. Une fondation selon le préambule de la revendication 1 est connue par le document EP 2 317 123 A.

L'invention a pour but de fournir une solution plus économique et plus simple à réaliser.

A cet effet, l'invention a pour objet une fondation d'éolienne off-shore du type précité, **caractérisée en ce que** chaque jambe est librement coulissante dans son guide.

La revendication 2 décrit un mode de réalisation avantageux de cette fondation. L'invention a également pour objet une éolienne off-shore comprenant :
- une fondation telle que définie ci-dessus ;
- un mât d'éolienne monté sur le support de mât ; et
- un ensemble nacelle-rotor monté dans la région supérieure du mât.

D'autres caractéristiques de cette éolienne sont décrites dans les revendications 4 à 6.

L'invention a encore pour objet un procédé de mise en place d'une éolienne off-shore, tel que décrit dans la revendication 7.

Des modes de mise en oeuvre de ce procédé sont décrits dans les revendications 8 à 10.

Des exemples de réalisation de l'invention vont maintenant être décrits en regard des dessins annexés, sur lesquels :
- la figure 1 représente schématiquement, en perspective, une éolienne off-shore conforme à 'invention dont la plateforme est disposée au-dessus de la surface de l'eau ;
- la figure 1A est une vue analogue d'une variante à plateforme immergée ;
- la figure 2 représente schématiquement à plus grande échelle, en perspective de dessus, la fondation de l'éolienne de la figure 1 ;
- les figures 3A et 3B représentent à plus grande échelle, en vue de côté, deux configurations possibles de l'extrémité inférieure des jambes de la fondation représentée sur la figure 2 ;
- la figure 4 représente schématiquement, en perspective, une barge de transport de l'éolienne ;
- la figure 5 représente schématiquement, en vue de côté, une barge de travail associée ;
- la figure 6 représente schématiquement, en vue de côté, un dispositif de déplacement relatif adapté pour le soulèvement de la plate-forme ;
- la figure 7 illustre schématiquement, par une vue en perspective, le blocage en position de la plateforme par rapport aux jambes ;
- la figure 8 est une vue à plus grande échelle, en demi-coupe méridienne, du détail VIII de la figure 7 ; et
- la figure 9 représente schématiquement, en vue de côté, une variante de dispositif de déplacement relatif.

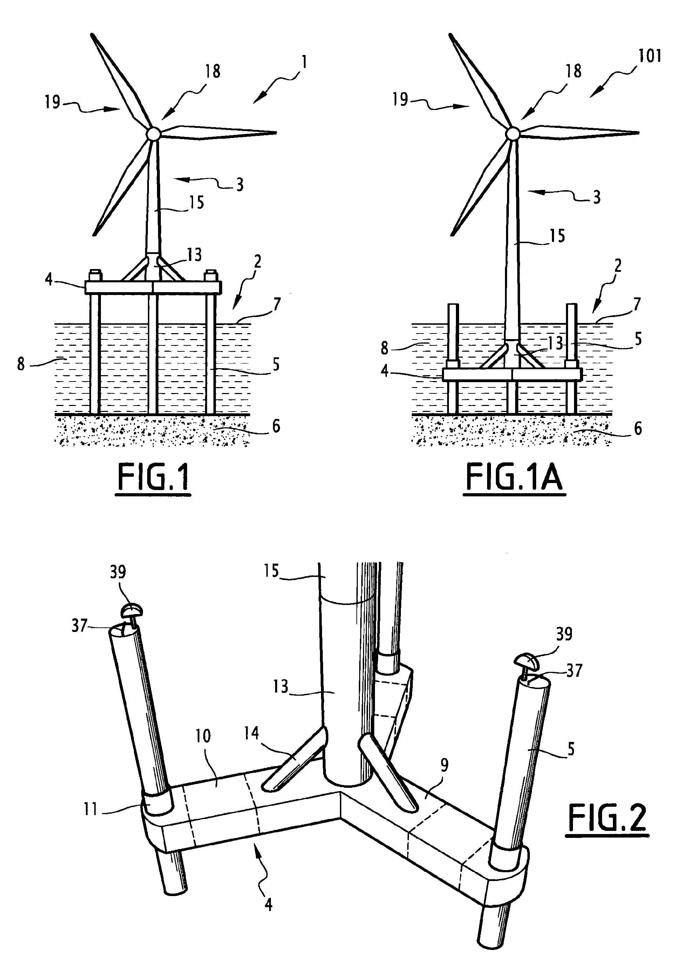

L'éolienne off-shore 1 représentée sur la figure 1 est constituée d'une fondation 2 et d'une superstructure 3. Tous les éléments structurels de l'éolienne sont réalisés en acier.

La fondation 2 comprend une plateforme 4 et trois jambes 5 d'appui sur le fond marin 6. Dans l'exemple représenté, la plateforme est destinée à être positionnée au-dessus de la surface 7 de la mer 8, à une hauteur supérieure à celle atteinte par les plus hautes vagues prévisibles dans la région considérée.

La plateforme 4, que l'on voit mieux sur la figure 2, a une forme d'étoile régulière à trois branches 9. Chaque branche est réalisée à partir de profilés métalliques et délimite une cavité 10 de ballastage dont le rôle apparaîtra plus loin.

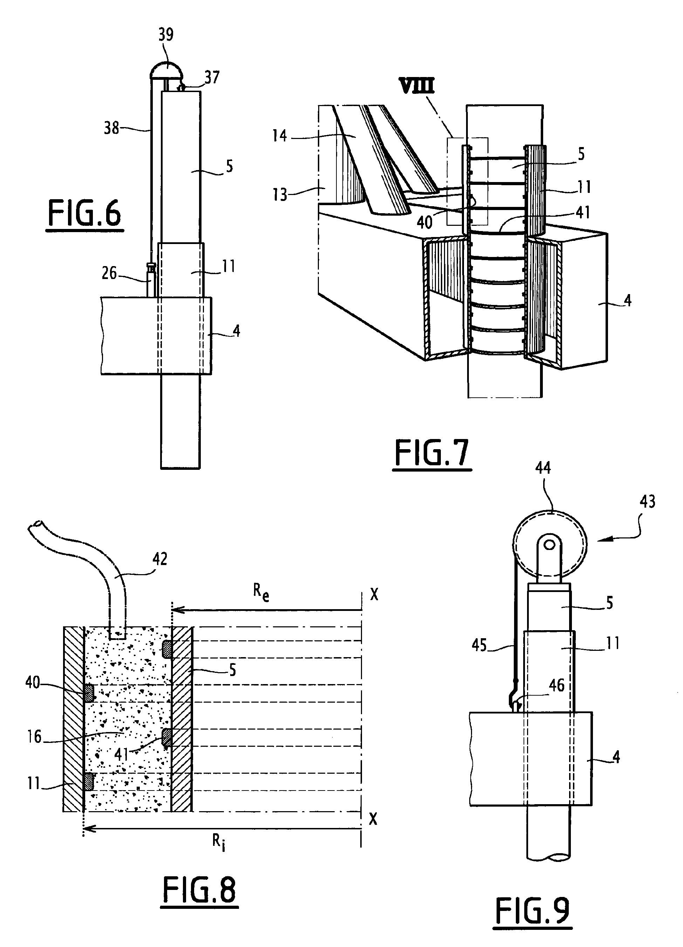

Chaque branche 9 comporte, au voisinage de son extrémité libre, un manchon vertical 11 qui traverse la plateforme sur toute sa hauteur et fait saillie vers le haut au-dessus de la surface supérieure de celle-ci. L'extrémité inférieure du manchon 11 affleure la face inférieure de la plateforme, comme on le voit sur la figure 6.

En son centre, la plateforme 4 porte un tube 13 en saillie sur sa surface supérieure. Ce tube, muni de trois contreforts 14, reçoit et positionne la base du mât 15 de la superstructure 3.

Chaque jambe 5 est constituée d'un tube dont la longueur est telle que lorsqu'il est en appui sur le fond marin et que la plateforme est dans sa position de service, l'extrémité supérieure de la jambe dépasse au-dessus du manchon 11, comme représenté sur la figure 1. Le rayon extérieur Rₑ du tube (figure 8) est légèrement inférieur au rayon intérieur Rᵢ du manchon 11. Ainsi, le tube 5 est librement coulissant verticalement dans le manchon, avec entre eux un espace annulaire 16.

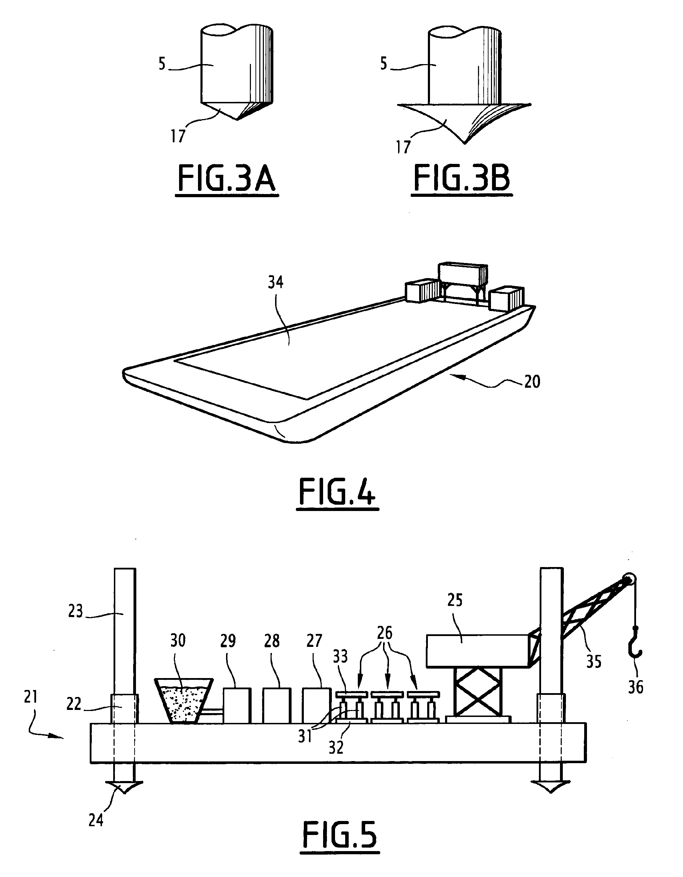

Chaque tube 5 est fermé à sa base par un pied 17 qui peut avoir diverses configurations en fonction de la nature du fond marin. Par exemple, le pied 17 peut être conique et de même diamètre que la jambe (figure 3A), ou en forme de semelle élargie à pointe centrale dirigée vers le bas (figure 3B).

Comme connu en soi, la superstructure 3 comporte, outre le mât 15, un ensemble nacelle 18 - rotor 19 fixé à l'extrémité supérieure du mât et muni d'un générateur d'électricité.

L'éolienne 1 comporte bien entendu tous les équipements d'accès à la plateforme, de traitement de l'électricité produite, de commande, de manutention, etc..., habituels dans le domaine des éoliennes off-shore. Ces équipements ne sont pas représentés et ne seront pas décrits plus en détail.

L'installation de l'éolienne ainsi décrite est réalisée au moyen d'une barge de transport 20 (figure 4) et d'une barge de travail 21 (figure 5).

La barge de transport 20 est une barge à pont plat, par exemple automotrice et capable de transporter deux éoliennes 1 complètes jusqu'à leur site d'exploitation. En variante, chaque éolienne peut être mise en flottaison au moyen d'un ensemble de caissons de flottabilité, et remorquée jusqu'à son site d'exploitation.

La barge de travail 21 est une barge de plus petites dimensions que la barge 20 et est par exemple automotrice et de forme rectangulaire. La barge 21 est munie à chaque coin d'un manchon 22 en saillie vers le haut et traversant la barge. Dans ce manchon coulisse une jambe tubulaire de positionnement 23 fermée à sa base par un pied. La barge 21 est équipée pour chaque jambe d'un mécanisme de montée/descente de cette jambe, par exemple du type à pignon et crémaillère.

La barge 21 comporte un pont plat sur lequel sont prévus les divers équipements nécessaires pour l'installation de l'éolienne : une grue 25, trois dispositifs élévateurs 26, une pompe à eau de mer 27, et une pompe à béton 29 associée à un réservoir de béton 30. Comme décrit plus loin, pour l'installation d'une éolienne à plateforme immergée, la barge 21 est équipée en outre d'une pompe à gravier 28, tandis que les dispositifs 26 sont remplacés par des dispositifs de descente.

Chaque dispositif élévateur 26 est un treuil linéaire constitué essentiellement d'un ensemble de vérins verticaux 31 et d'un ensemble de câbles. Les corps des vérins sont fixés à une plaque horizontale inférieure 32, tandis que les tiges de piston des deux vérins sont fixées à une plaque horizontale supérieure 33. Les plaques 32 et 33 comportent des moyens de serrage unidirectionnel de câbles. La commande alternative des vérins permet de faire grimper le dispositif le long des câbles lorsque ceux-ci sont accrochés à un point haut fixe

De tels dispositifs sont bien connus dans le domaine du bâtiment et des travaux publics et sont par exemple des vérins à traction de câble commercialisés par la société ENERPAC.

La barge 21 comporte également divers dispositifs d'actionnement et de commande, non représentés, qui permettent de mettre en oeuvre les étapes d'installation de l'éolienne qui vont maintenant être décrites.
(1) L'éolienne est transportée sur son site d'exploitation par la barge 20, avec la plate forme posée sur le pont 34 de la barge et les jambes 5 en position haute. Dans cette position, les pieds 17 se trouvent juste au-dessous du niveau du pont 34 et sont donc émergés. Les jambes sont maintenues dans cette position haute par des cales provisoires appropriées non représentées.
(2) Les barges 20 et 21 sont amenées sur le site, les jambes 23 de la barge 21 étant en position haute.
(3) La barge 21 manoeuvre de manière à positionner la flèche 35 de la grue 25 au-dessus d'une première jambe 5, puis la barge 21 est positionnée par descente de ses quatre jambes 23 et appui de celles-ci sur le fond marin.
(4) Par son crochet de levage 36, la grue saisit un organe de suspension 37 (figure 2) prévu au sommet de la jambe 5, les cales de cette jambe sont retirées , et la grue provoque la descente de la jambe jusqu'à appui de son pied 17 sur le fond marin. Pendant cette descente, la jambe se remplit d'eau grâce à des ouvertures prévues sur la hauteur de la jambe.
(5) La grue vient ensuite saisir un premier dispositif de déplacement 26 et le dépose sur la plateforme 4, au voisinage immédiat du manchon 11. Une équipe accroche une extrémité des câbles 38 (figure 6) à l'organe 37, les fait passer sur un guide semi-circulaire 39 fixé au sommet de la jambe (figures 2 et 6), et les fait passer à travers le dispositif 26. La plaque inférieure 32 du dispositif 26 est accrochée sur la plateforme, à proximité du manchon 11.
(6) La barge 21 manoeuvre pour amener la flèche de la grue au dessus d'une deuxième jambe, puis est positionnée au moyen de ses jambes 23, et les étapes (4) et (5) sont répétées.
(7) La barge 21 manoeuvre pour amener la flèche de la grue au-dessus de la troisième jambe 5, puis est positionnée au moyen de ses jambes 23 , et les étapes (4) et (5) sont répétées.
(8) Les trois treuils linéaires 26 sont actionnés simultanément de façon qu'ils grimpent légèrement le long des câbles 38. Cette opération soulève légèrement la plateforme 4, laquelle se dégage du pont 34 de la barge 20. Celle-ci est alors éloignée.
(9) Les jambes 5, en appui sur le fond marin, sont tassées par des efforts alternés par remplissage d'eau de mer du ballast 10 situé près de chaque jambe et contenu dans la plate-forme, alterné avec une vidange du ballast..
   Pour cela, au moyen d'un tuyau non représenté, la pompe 27 de la barge 21 emplit et vide alternativement les ballasts 10 de la plateforme.
(10) Les trois treuils linéaires 26 sont actionnés simultanément pour continuer leur ascension le long des câbles 38. Ce faisant, ils entraînent vers le haut la plateforme 4, jusqu'à ce qu'elle atteigne l'altitude désirée.
(11) La plateforme étant ainsi dans sa position définitive, cette position est bloquée de la manière suivante, illustrée aux figures 7 et 8 pour l'une des jambes 5.
   Le manchon 11 est équipé au préalable, sur sa surface intérieure, de plusieurs anneaux circulaires soudés 40. La jambe 5 est équipée au préalable, sur sa surface extérieure située en regard du manchon 11, de plusieurs anneaux circulaires soudés 41. Les anneaux 41 sont décalés d'environ un demi-pas par rapport aux anneaux 40.
   Au moyen d'un tuyau 42, la pompe 29 injecte dans l'espace annulaire 16 séparant la jambe 5 du manchon 11 du béton prélevé dans le réservoir 30.
   La même opération est répétée pour chaque jambe. La prise du béton bloque la plateforme dans sa position, avec une sécurité accrue par la présence des anneaux 40 et 41.
   En variante, ce blocage de la plateforme en position peut être réalisé à l'aide de cales mécaniques.
(12) Les trois treuils linéaires 26 sont démontés, et la grue 25 les ramène sur la barge 21.
   Il est à noter que lorsque cela est nécessaire, les jambes 23 de la barge 21 peuvent être remontées pour rendre à cette barge sa mobilité et lui permettre ainsi de se déplacer d'une jambe 5 à l'autre et d'un ballast 10 à l'autre.
   L'installation de l'éolienne 1 est alors terminée. La barge 21 peut être déplacée jusqu'au site d'installation d'une nouvelle éolienne, par exemple d'une éolienne analogue également portée par la barge 20.
   Le procédé d'installation décrit ci-dessus permet de construire sur la terre ferme la totalité de l'éolienne, et de réduire le coût de celle-ci. En effet, les jambes 5 sont de simples tubes coulissant librement dans un manchon de la plateforme, et les dispositifs de levage 26, qui ne servent qu'une fois pour chaque éolienne, lors de son installation, sont récupérés et réutilisés pour l'installation de toutes les éoliennes successives.
   Lorsqu'on installe une éolienne 101 à plateforme immergée (figure 1A), comme illustré sur la figure 9, les treuils linéaires 26 sont remplacés par de simples treuils 43 à tambour 44.
   Ces treuils, portés initialement par la barge 21, sont mis en place et fixés au sommet de chaque jambe après la descente de celle-ci, puis leur câble 45 est accroché à un crochet 46 prévu sur la plateforme au voisinage du manchon 11.
   De tels treuils 43 permettent de faire descendre la plateforme 4 jusqu'à une position de service située au-dessous du niveau de la mer.
   Ainsi, pour installer l'éolienne, on effectue les étapes (1) à (7) ci-dessus. Puis, au lieu de l'étape (8), on ballaste la barge 20 pour en dégager l'éolienne et permettre d'éloigner la barge 20. L'étape (10) est remplacée par l'actionnement simultané des treuils 43 afin de faire descendre la plateforme jusqu'à la profondeur désirée.
   Enfin, après l'étape (12) de retrait des treuils 43, on procède à l'étape supplémentaire suivante :
(13) Au moyen de la pompe à gravier 28, du gravier, contenu soit dans un réservoir porté par la barge 21, soit dans une barge auxiliaire non représentée, est envoyé via un tuyau non représenté dans les ballasts 10 de la plateforme, pour compléter le lestage de l'éolienne. Les ballasts 10 peuvent, dans ce cas, être ouverts vers le haut.

Bien entendu, dans chaque cas plusieurs dispositifs de déplacement relatif 26, 43 peuvent être associés à chaque jambe 5.

## Revendications

1. Fondation (2) d'éolienne off-shore, du type comprenant :
- une plateforme (4) portant un support (13) de mât d'éolienne dans sa région centrale, et plusieurs guides (11) de jambe dans sa région périphérique ;
- plusieurs jambes (5) dont chacune peut être déplacée entre une position haute de transport et des positions basses d'appui sur le fond marin (6),
**caractérisée en ce que** chaque jambe (5) est librement coulissante dans son guide (11).

2. Fondation (2) d'éolienne offshore suivant la revendication 1, **caractérisée en ce qu'**elle comprend des moyens (16, 40, 41) de blocage de chaque jambe (5) en position dans son guide (11).

3. Eolienne off-shore (1), **caractérisée en ce qu'**elle comprend :
- une fondation (2) suivant la revendication 1 ou 2;
- un mât (15) d'éolienne monté sur le support (3) de mât ; et
- un ensemble nacelle (18)-rotor (19) monté dans la région supérieure du mât (15).

4. Eolienne (1) suivant la revendication 3, **caractérisée en ce que** chaque jambe (5) est bloquée en place dans son guide (11) par un anneau de matière durcissable, notamment de béton, coulé dans un espace annulaire (16) situé entre la jambe (5) et le guide (11).

5. Eolienne (1) suivant la revendication 4, **caractérisée en ce que** l'une au moins des surfaces cylindriques en regard de la jambe (5) et du guide (11) est équipée d'au moins un relief (40, 41) en saillie vers l'autre de ces surfaces.

6. Eolienne suivant la revendication 5, **caractérisée en ce que** chacune desdites surfaces cylindriques est équipée d'au moins un anneau circulaire (40, 41) constituant ledit relief, les anneaux des deux surfaces étant décalés verticalement les uns par rapport aux autres.

7. Procédé de mise en place d'une éolienne off-shore (1), **caractérisé en ce que** :
(a) on transporte sur le site d'exploitation une fondation (2) suivant la revendication 1 ou 2 ou une éolienne (1) suivant l'une quelconque des revendications 3 à 6, avec les jambes (5) en position haute ;
(b) on amène et on positionne sur le site au moins une barge de travail (21) qui porte :
- une grue (25) ; et
- pour chaque jambe (5), au moins un dispositif (26, 43) de déplacement relatif de la jambe par rapport à la plate-forme (4) ;
(c) au moyen de la grue, on fait descendre successivement chaque jambe jusqu'à ce qu'elle soit en appui sur le fond marin (6) ;
(d) on positionne chaque dispositif de déplacement relatif de manière qu'il coopère avec la jambe associée et avec la plateforme (4) ;
(e) en actionnant simultanément les dispositifs de déplacement relatif (26, 43), on déplace verticalement la plateforme (4) jusqu'à sa position de service désirée ;
(f) on bloque la plateforme (4) en position par rapport aux jambes ; et
(g) on retire les dispositifs de déplacement relatif (26, 43) de la fondation (2) et des jambes (5), et on replace ces dispositifs sur la barge de travail (21).

8. Procédé selon la revendication 7, **caractérisé en ce qu'**on utilise une barge de travail (21) munie d'une réserve de matière durcissable (30), notamment de béton, et d'une pompe (29) pour cette matière, et, après l'étape (c), on bloque en place chaque jambe (5) par rapport à la plate-forme (4) par injection de ladite matière dans un espace annulaire (16) situé entre la jambe et le guide associé (11).

9. Procédé suivant la revendication 7 ou 8, **caractérisé en ce qu'**on utilise une barge de travail (21) munie d'une pompe à eau (27), et, après l'étape (c), on tasse les jambes (5) en remplissant d'eau de mer et en vidant de façon répétée des ballasts (10) prévus sur la plateforme (4).

10. Procédé suivant l'une quelconque des revendications 7 à 9, pour la mise en place d'une éolienne (101) à plateforme (4) immergée, **caractérisé en ce qu'**on utilise une barge de travail (21) munie d'une pompe à gravillons (28), et, après l'étape (e), on leste la fondation en remplissant des ballasts (10) de la plate-forme (4) avec des gravillons.

## Patentansprüche

1. Off-Shore-Gründung (2) einer Windenergieanlage der Bauart, die umfasst:
- eine Plattform (4), die einen Ständer (13) eines Windenergieanlagenmasts in ihrer zentralen Region mit mehreren Beinführungen (11) in ihrer Umfangsregion trägt,
- mehrere Beine (5), von denen jedes zwischen einer hohen Transportposition und niedrigen Stützpositionen auf dem Meeresgrund (6) verlagerbar ist,
**dadurch gekennzeichnet, dass** jedes Bein (5) in seiner Führung (11) frei gleitbar ist.

2. Gründung (2) einer Off-Shore-Windenergieanlage nach Anspruch 1, **dadurch gekennzeichnet, dass** sie Blockademittel (16, 40, 41) jedes Beins (5) in Position in seiner Führung (11) umfasst.

3. Off-Shore-Windenergieanlage (1), **dadurch gekennzeichnet, dass** sie umfasst:
- eine Gründung (2) nach Anspruch 1 oder 2,
- einen auf dem Mastständer (3) montierten Windenergieanlagenmast (15) und
- eine Gondel (18)/Rotor (19)-Einheit, die in der oberen Region des Masts (15) montiert ist.

4. Windenergieanlage (1) nach Anspruch 3, **dadurch gekennzeichnet, dass** jedes Bein (5) mittels eines Rings aus härtbarem Material, insbesondere aus Beton, der in einen ringförmigen Raum (16) zwischen dem Bein (5) und der Führung (11) gegossen wird, in seiner Führung (11) platziert blockiert ist.

5. Windenergieanlage (1) nach Anspruch 4, **dadurch gekennzeichnet, dass** mindestens eine der zylindrischen Flächen gegenüber dem Bein (5) und der Führung (11) mit mindestens einem in Richtung der anderen dieser Flächen hervorstehenden Relief (40, 41) ausgestattet ist.

6. Windenergieanlage nach Anspruch 5, **dadurch gekennzeichnet, dass** jede der zylindrischen Flächen mit mindestens einem kreisförmigen Ring (40, 41) ausgestattet ist, der das Relief bildet, wobei die Ringe der zwei Flächen vertikal zueinander versetzt sind.

7. Verfahren zur Platzierung einer Off-Shore-Windenergieanlage (1), **dadurch gekennzeichnet, dass**:
(a) an die Betriebsstelle eine Gründung (2) nach Anspruch 1 oder 2 oder eine Windenergieanlage (1) nach einem der Ansprüche 3 bis 6 mit den Beinen (5) in hoher Position transportiert wird;
(b) mindestens eine Arbeitsschute (21) an den Standort geführt und dort positioniert wird, die trägt:
- einen Kran (25) und
- für jedes Bein (5) mindestens eine Vorrichtung (26, 43) zur relativen Verlagerung des Beins im Verhältnis zur Plattform (4),
(c) jedes Bein schrittweise mittels des Krans herabgelassen wird, bis es sich auf dem Meeresgrund (6) abstützt,
(d) jede Vorrichtung zur relativen Verlagerung derart positioniert wird, dass sie mit dem zugeordneten Bein und mit der Plattform (4) zusammenarbeitet,
(e) die Plattform (4) durch gleichzeitige Betätigung der Vorrichtungen zur relativen Verlagerung (26, 43) bis zu ihrer gewünschten Serviceposition vertikal verlagert wird,
(f) die Plattform (4) in Position im Verhältnis zu den Beinen blockiert wird und
(g) die Vorrichtungen zur relativen Verlagerung (26, 43) aus der Gründung (2) und den Beinen (5) entfernt und diese Vorrichtungen auf die Arbeitsschute (21) zurückgestellt werden.

8. Verfahren nach Anspruch 7, **dadurch gekennzeichnet, dass** eine mit einer Reserve härtbaren Materials (30), insbesondere Beton, und einer Pumpe (29) für dieses Material ausgestattete Arbeitsschute (21) verwendet wird und dass nach Schritt (c) jedes Bein (5) im Verhältnis zur Plattform (4) durch Spritzen des Materials in einen ringförmigen Raum (16) zwischen dem Bein und der entsprechenden Führung (11) platziert blockiert wird.

9. Verfahren nach Anspruch 7 oder 8, **dadurch gekennzeichnet, dass** eine mit einer Wasserpumpe (27) ausgestattete Arbeitsschute (21) verwendet wird und dass nach Schritt (c) die Beine (5) durch wiederholtes Füllen mit Meerwasser und Entleeren der auf der Plattform (4) vorgesehenen Ballaste (10) festgestampft werden.

10. Verfahren nach einem der Ansprüche 7 bis 9 für die Platzierung einer Windenergieanlage (101) auf einer eingetauchten Plattform (4), **dadurch gekennzeichnet, dass** eine mit einer Kiespumpe (28) ausgestattete Arbeitsschute (21) verwendet wird und nach Schritt (e) die Gründung durch Füllen der Ballaste (10) der Plattform (4) mit Kies beschwert wird.

## Claims

1. Foundation (2) for an offshore wind turbine, of the type comprising:
- a platform (4) carrying a support (13) for a wind turbine tower in its central region, and a plurality of leg guides (11) in its peripheral region,
- a plurality of legs (5) each of which may be moved between a raised position for transport and lowered positions for resting on the seabed (6),
**characterised in that** each leg (5) is freely sliding in its guide (11).

2. Foundation (2) for an offshore wind turbine according to claim 1, **characterised in that** it comprises means (16, 40, 41) for locking each leg (5) in position in its guide (11).

3. An offshore wind turbine (1), **characterised in that** it comprises:
- a foundation (2) according to Claim 1 or 2,
- a wind turbine tower (15) mounted on the support (3) of the tower, and
- a nacelle (18) - rotor (19) assembly mounted in the upper region of the tower (15).

4. A wind turbine (1) according to Claim 3, **characterised in that** each leg (5) is locked in place in its guide (11) by a ring made of a curable material, in particular of concrete, cast in an annular space (16) located between the leg (5) and the guide (11).

5. A wind turbine (1) according to claim 4, **characterised in that** at least one of the facing cylindrical surfaces of the leg (5) and of the guide (11) is equipped with at least one relief (40, 41) projecting out towards the other of these surfaces.

6. A wind turbine according to claim 5, **characterised in that** each of the said cylindrical surfaces is provided with at least one circular ring (40, 41) constituting said relief, the rings of the two surfaces being offset vertically relative to each other.

7. A method for the on site installation of an off-shore wind turbine (1), **characterised in that**:
(a) transportation is undertaken to the site of operation of a foundation (2) according to claim 1 or 2 or a wind turbine (1) according to any one of claims 3 to 6, with the legs (5) in the raised position ;
(b) transporting and positioning on the site of at least one work barge (21) which carries :
- a crane (25) ; and
- for each leg (5), at least one device (26, 43) for relative movement of the leg in relation to the platform (4) ;
(c) by means of the crane, each leg is successively lowered until it is resting on the seabed (6) ;
(d) positioning of each relative movement device in a manner such that it cooperates with the associated leg and with the platform (4) ;
(e) by simultaneously actuating the relative movement devices (26, 43), the platform (4) is vertically moved to its desired operational - service position ;
(f) the platform (4) is locked into position in relation to the legs ; and
(g) the relative movement devices (26, 43) are removed from the foundation (2) and the legs (5), and these devices are placed back on the work barge (21).

8. A method according to claim 7, **characterised in that** it makes use of a work barge (21) provided with a supply of curable material (30), in particular of concrete, and a pump (29) for this material, and, after step (c), each leg (5) is locked in place relative to the platform (4) by injecting the said material into an annular space (16) located between the leg and the associated guide (11).

9. A method according to claim 7 or 8, **characterised in that** it makes use of a work barge (21) provided with a water pump (27), and, after step (c), the legs (5) are packed by ensuring that the ballasts (10) provided on the platform (4) are filled up with seawater and then emptied of it in a repetitive manner.

10. A method according to any one of claims 7 to 9, for the on site installation of a wind turbine (101) with submerged platform (4), **characterised in that** it makes use of a work barge (21) provided with a gravel pump (28), and, after step (e), the foundation is ballasted by filling the ballasts (10) of the platform (4) with gravel.
